# EUROPÄISCHE PATENTSCHRIFT

(11) **EP 4 033 452 B1**
(45) Veröffentlichungstag und Bekanntmachung des Hinweises auf die Patenterteilung: **21.08.2024**
(21) Anmeldenummer: 22152675.9
(22) Anmeldetag: 21.01.2022
(51) Int. Cl.: G06V 10/44, G06V 10/774, G06V 10/82, G06V 20/56, G06N 3/045, G06N 3/08, B60W 30/09

(54) **DOMÄNENUNABHÄNGIGES TRAINING VON BILDKLASSIFIKATOREN**
DOMAIN INDEPENDENT TRAINING OF IMAGE CLASSIFIERS
APPRENTISSAGE INDÉPENDANT DU DOMAINE DES CLASSIFICATEURS D'IMAGE

(30) Priorität: 25.01.2021 DE 102021200614
(43) Veröffentlichungstag der Anmeldung: 27.07.2022
(73) Patentinhaber: Robert Bosch GmbH, 70442 Stuttgart (DE)
(72) Erfinder: Kapelner, Tamas, 31139 Hildesheim (DE); Wenzel, Thomas, 22089 Hamburg (DE)

(56) Entgegenhaltungen:
- FOURURE DAMIEN ET AL: "Multi-task, multi-domain learning: Application to semantic segmentation and pose regression", NEUROCOMPUTING, vol. 251, August 2017 (2017-08-01), AMSTERDAM, NL, pages 68 - 80, XP055815962, ISSN: 0925-2312, DOI: 10.1016/j.neucom.2017.04.014
- YAROSLAV GANIN ET AL: "Unsupervised domain adaptation by backpropagation", JMLR WORKSHOP AND CONFERENCE PROCEEDINGS, vol. 37, June 2015 (2015-06-01), pages 1180 - 1189, XP055349552
- CHEN YI-HSIN ET AL: "No More Discrimination: Cross City Adaptation of Road Scene Segmenters", 2017 IEEE INTERNATIONAL CONFERENCE ON COMPUTER VISION (ICCV), IEEE, 22 October 2017 (2017-10-22), pages 2011 - 2020, XP033283063, DOI: 10.1109/ICCV.2017.220

## Beschreibung

Die vorliegende Erfindung betrifft das Training von Bildklassifikatoren, die beispielsweise für die Auswertung von Verkehrssituationen im Rahmen des zumindest teilweise automatisierten Führens von Fahrzeugen verwendet werden können.

### Stand der Technik

Viele Systeme zum zumindest teilweise automatisierten Führen von Fahrzeugen verwenden Bilder, die im Umfeld des Fahrzeugs aufgenommen wurde, als wichtige Informationsquelle. Die Bilder werden üblicherweise von einem Bildklassifikator auf das Vorhandensein bestimmter verkehrsrelevanter Objekte untersucht. Anhand des Ergebnisses dieser Untersuchung wird das Verhalten des Fahrzeugs in der nächsten Zukunft geplant.

Bildklassifikatoren werden meist mit Machine Learning-Modellen realisiert, die eine große Kraft zur Verallgemeinerung haben. Nach einem Training mit endlich vielen Trainingssituationen können solche Bildklassifikatoren nicht nur diese Trainingssituationen, sondern auch eine Vielzahl bislang ungesehener Situationen zutreffend auswerten. So wird etwa ein neu eingeführtes Automodell immer noch als Auto erkannt.

Trainingsbilder für Bildklassifikatoren sind eine knappe und teure Ressource, da sie auf langen Testfahrten "eingefahren" werden und in der Regel manuell mit dem Soll-Inhalt, den der Bildklassifikator darin erkennen soll, "gelabelt" werden müssen. Dabei müssen die Trainingsbilder in Bezug beispielsweise auf Jahreszeiten, Wetterbedingungen und Typen von Verkehrssituationen die Bedingungen, denen das Fahrzeug voraussichtlich begegnen wird, in hinreichender Breite abdecken.

Um den Bedarf an manuellem "Labeln" zu verringern, offenbart die DE 10 2018 204 494 B3 ein Verfahren zur Erzeugung synthetischer Radarsignale.

(D. Fourure et al., "Multi-task, multi-domain learning: Application to semantic segmentation and pose regression", Neurocomputing 251, 68-80, DOI: 10.1016/j.neucom.2017.04.014 (2017)) offenbart ein Verfahren zum Trainieren eines neuronalen Netzwerks für die Verarbeitung von Bildern, das Trainings-Beispiele, die für ähnliche, aber doch unterschiedliche Aufgaben mit "ground truth" gelabelt wurden, optimal ausnutzt.

(Y. Ganin et a., "Unsupervised domain adaptation by backpropagation", JMLR Workshop and Conference Proceedings 37, 1180-1189 (2015)) offenbart ein weiteres Trainingsverfahren für das Training mit Trainings-Beispielen aus verschiedenen Domänen. Das Netzwerk wird speziell dazu angehalten, seine Entscheidung vorwiegend auf domänenunabhängige Merkmale zu richten und nicht auf Merkmale, die für die jeweilige Domäne spezifisch sind.

(Y-H Chen et al., "No More Discrimination : Cross City Adaptation of Road Scene Segmenters", 2017 IEEE International Conference on Computer Vision, 2011-2020, DOI: 10.1109/ICCV.2017.220 (2017)) erweitert dieses domänenübergreifende Training auf eine semantische Segmentierung von Bildern als Klassifikationsaufgabe.

### Offenbarung der Erfindung

Im Rahmen der Erfindung wurde ein Verfahren zum Trainieren eines Bildklassifikators entwickelt. Dieser Bildklassifikator verarbeitet ein Eingabe-Bild in einer Abfolge aus mehreren Faltungsschichten zu einem Zwischenprodukt und bildet dieses Zwischenprodukt mit mindestens einer Klassifikatorschicht auf einen oder mehrere Klassifikations-Scores bezüglich einer ("one-hot" Score) oder mehrerer vorgegebener Klassen ab. Bildklassifikatoren können insbesondere auch als Objektdetektoren verwendet werden, die beispielsweise für jedes im Bild vorhandene Objekt einen hohen Klassifikations-Score in Bezug auf die jeweilige Klasse liefern.

Der Begriff des Bildes ist nicht auf Kamerabilder beschränkt, sondern umfasst allgemein jede Auftragung, die Orten in einem zwei- oder mehrdimensionalen Gebiet, sowie optional auch Zeitpunkten, jeweils Werte mindestens einer physikalischen Messgröße zuordnet. Neben Kamerabildern werden erfindungsgemäß Radarbilder verwendet. Zusätzlich können beispielsweise Lidar-Bilder, Wärmebilder, Videobilder sowie Ultraschallbilder verwendet werden. Auch Radardaten und Lidardaten, die originär in Form von Punktwolken aufgenommen werden, schaffen eine Zuordnung der jeweiligen Messgrößen zu Orten und sind somit als Bilder anzusehen, da sie analog zu anderen Arten von Bildern weiterverarbeitet werden können.

In einer besonders vorteilhaften Ausgestaltung wird ein Bildklassifikator gewählt, der dazu ausgebildet ist, das Eingabe-Bild auf einen oder mehrere Klassifikations-Scores je Pixel des Eingabe-Bildes abzubilden und so eine semantische Segmentierung dieses Eingabe-Bildes zu liefern. Semantische Segmentierungen sind wichtige Vorprodukte für eine Auswertung von Eingabe-Bildern im Hinblick auf das zumindest teilweise automatisierte Führen von Fahrzeugen im Verkehr.

In einer Faltungsschicht wird jeweils eine Mehrzahl von Filterkernen auf die Eingabe der Faltungsschicht angewendet, beispielsweise durch sukzessive Bewegung des Filterkerns relativ zu dieser Eingabe nach Maßgabe eines Rasters. Die Anwendung eines jeden Filterkerns erzeugt eine Merkmalskarte ("feature map"). Durch eine Abfolge von Faltungsschichten kann insbesondere beispielsweise ein Zwischenprodukt erzeugt werden, das gegenüber dem ursprünglichen Eingabe-Bild in seiner Dimensionalität deutlich reduziert ist.

Das Verfahren arbeitet mit Trainingsbildern. Daher werden Trainingsbilder bereitgestellt. Mindestens eine erste Teilmenge dieser Trainingsbilder gehört einer ersten Verteilung an, und mindestens eine zweite Teilmenge der Trainingsbilder gehört einer zweiten Verteilung an. Die beiden Verteilungen korrespondieren zu unterschiedlichen Domänen von Trainingsbildern.

Typischerweise generalisiert ein Training, das auf Trainingsbildern einer Verteilung durchgeführt wurde, besonders gut auf ungesehene Bilder, die ebenfalls dieser Verteilung angehören. Das Ziel des vorliegenden Verfahrens ist, dass das Training auch auf Bilder aus anderen Verteilungen (Domänen) gut generalisiert. Die beiden Teilmengen können insbesondere beispielsweise disjunkt sein.

Eine Domäne von Trainingsbildern beschreibt im weitesten Sinne eine Konsistenz, bzw. einen Zusammenhang, zwischen den Trainingsbildern, die dieser Domäne angehören. Die Domänen können insbesondere beispielsweise zu
- unterschiedlichen Konfigurationen der für die Bildaufnahme verwendeten Sensorsysteme, und/oder
- unterschiedlichen Tages- und/oder Jahreszeiten bei der Bildaufnahme, und/oder
- unterschiedlichen Wetterbedingungen bei der Bildaufnahme, und/oder
- unterschiedlichen geographischen Regionen, in denen die Trainingsbilder aufgenommen wurden,
korrespondieren.

Konkret werden Trainingsbilder aus Domänen gewählt, die zu unterschiedlichen Konfigurationen der für die Bildaufnahme verwendeten Sensorsysteme korrespondieren, wobei mindestens ein Sensorsystem Kamerabilder liefert und mindestens ein weiteres Sensorsystem Radarbilder liefert.

Es werden Soll-Klassifikations-Scores bereitgestellt, auf die der Bildklassifikator Trainingsbilder im fertig trainierten Zustand nominell abbilden soll. Dabei müssen nicht für alle Trainingsbilder Soll-Klassifikations-Scores verfügbar sein. Wie später noch erläutert wird, können Trainingsbilder in dem Verfahren allein auf Grund ihrer Zugehörigkeit zu einer bestimmten Domäne schon eine sinnvolle Funktion erfüllen, auch wenn sie nicht mit Soll-Klassifikations-Scores im Hinblick auf die primäre Aufgabenstellung des Bildklassifikators "gelabelt" sind.

Die Trainingsbilder werden dem Bildklassifikator als Eingabe-Bilder zugeführt und von dem Bildklassifikator jeweils auf einen oder mehrere Klassifikations-Scores abgebildet. Mindestens eine hierbei entstehende Ausgabe einer Faltungsschicht wird einem Domänenklassifikator zugeführt und von diesem Domänenklassifikator auf Domänen-Zuordnungen des Trainingsbildes zu verschiedenen Domänen abgebildet. Die Domänen-Zuordnungen werden somit nicht aus dem Endergebnis ermittelt, das der Bildklassifikator ermittelt hat, sondern aus einem Zwischenergebnis, das noch einen wesentlich höheren Informationsgehalt hat als die bloßen Klassifikations-Scores.

Dabei kann ein Domänenklassifikator mit mindestens einer vollvernetzten Schicht gewählt werden. Es werden dann räumliche Auswahlen aus der Ausgabe der Faltungsschicht in diese vollvernetzte Schicht geführt. Hiermit kann festgelegt werden, welche Bereiche der Trainingsbilder für die Domänenklassifikation herangezogen werden können. Sind beispielsweise auf Grund von Vorwissen Bereiche in den Trainingsbildern bekannt, die in besonderem Maße für die Domänenklassifikation relevant sind, können diese etwa mit "ROI-Pooling" zusammengefasst und in die vollvernetzte Schicht geführt werden. Umgekehrt können für die Domänenklassifikation nicht relevante Bereiche ausgeblendet werden. Weiterhin können unterschiedliche Größen von Merkmalen in Trainingsbildern, wie sie beispielsweise durch unterschiedliche Entfernungen von einem für die Bildaufnahme verwendeten Sensor entstehen können, aufeinander normiert werden.

Alternativ kann ein Domänenklassifikator gewählt werden, der eine Segmentierung der Ausgabe der Faltungsschicht nach Domänen erzeugt. Die Domänenklassifikation wird dann effektiv für verschiedene räumliche Untereinheiten des Trainingsbildes, wie beispielsweise Pixel oder Pixelblöcke, durchgeführt. Aus einem einzigen Trainingsbild entstehen also viele Domänenklassifikationsergebnisse.

Parameter, die das Verhalten des Bildklassifikators charakterisieren, werden optimiert mit dem Ziel, dass bei weiterer Verarbeitung von Trainingsbildern eine Abweichung der vom Bildklassifikator gelieferten Klassifikations-Scores von den Soll-Klassifikations-Scores minimiert wird, während eine Abweichung der Domänen-Zuordnungen von den tatsächlichen Domänen der jeweiligen Trainingsbilder maximiert wird.

Es wurde erkannt, dass der Bildklassifikator auf diese Weise dazu angehalten wird, seine Entscheidung über die Klassifikations-Scores bezüglich der vorgegebenen Klassen auf solche Merkmale zu stützen, die von der Domäne der Trainingsbilder unabhängig sind. Dies wiederum hat die Wirkung, dass im späteren Wirkbetrieb des Bildklassifikators nach dem Training die Genauigkeit der Klassifikation in deutlich geringerem Maße davon abhängt, ob die dann vorgelegten Eingabe-Bilder einer der für das Training verwendeten Domänen angehören.

Dabei haben speziell die oben beschriebenen alternativen Ausgestaltungen des Domänenklassifikators den Vorteil, dass jeweils mehrere Domänen-Zuordnungen je Trainingsbild entstehen. Diese mehreren Domänen-Zuordnungen können bei der Gesamtwürdigung im Rahmen der Optimierung von Parametern des Bildklassifikators genauer bewertet und insbesondere beispielsweise gewichtet werden.

Der Domänenklassifikator wird bei der späteren Nutzung des fertig trainierten Bildklassifikators im Rahmen seiner primären Anwendung nicht mehr benötigt. Somit erhöht das hier beschriebene Training nicht permanent die Komplexität der Ausführung des Bildklassifikators.

Wenn der Bildklassifikator für Bilder von Verkehrssituationen beispielsweise ein Objekt als Fahrzeug identifiziert, kann er diese Entscheidung auf verschiedene Kriterien stützen. Er kann beispielsweise die Form des Objekts heranziehen, aber auch beispielsweise Farben und/oder Texturen von Oberflächen. Hierbei ist es beispielsweise wünschenswert, dass der Bildklassifikator das Fahrzeug nicht nur am Tage identifizieren kann, sondern auch in der Nacht. Der Bildklassifikator sollte seine Entscheidung daher nicht auf die Farben und/oder Texturen stützen, die nachts nicht mehr erkennbar sind, obwohl gerade diese Merkmale am Tage besonders gut zu erkennen sind. Stattdessen sollte der Bildklassifikator das Fahrzeug über seine Form identifizieren, auch wenn dies einen höheren Trainingsaufwand bedeutet.

Genau dieses Verhalten wird mit dem hier beschriebenen Trainingsverfahren bewirkt. Wenn der Bildklassifikator die Textur oder Farbe des Objekts für die Entscheidung heranzieht, schlägt sich dies in den Merkmalskarten nieder, die auf dem Weg zu dieser Entscheidung von den Faltungsschichten gebildet werden. Werden diese Merkmalskarten nun dem Domänenklassifikator zugeführt, kann dieser aus der bloßen Erkennbarkeit oder Nicht-Erkennbarkeit der Textur oder Farbe bereits folgern, ob das Bild am Tage oder in der Nacht aufgenommen wurde. Daher wird das Ziel, eine Abweichung der Domänen-Zuordnungen von den tatsächlichen Domänen der Trainingsbilder zu maximieren, nicht erreicht. Wenn der Bildklassifikator hingegen die Form des Objekts für die Entscheidung heranzieht, "verraten" die auf dem Weg zu dieser Entscheidung gebildeten Merkmalskarten dem Domänenklassifikator noch nicht, ob das Bild am Tage oder in der Nacht aufgenommen wurde. Daher kann der Domänenklassifikator quasi nur noch "raten", zu welcher Tageszeit das Bild aufgenommen wurde, so dass diesbezüglich nur noch eine Klassifikationsgenauigkeit von 50 % zu erwarten ist. Das Ziel, gerade diese Klassifikationsgenauigkeit zu verschlechtern, wird also gut erreicht. Eine gute diesbezügliche Leistung kann in der Gesamtwertung durchaus eine etwas schlechtere Genauigkeit bei der Identifizierung des Objekts aufwiegen.

Analoges gilt, wenn die Domänen unterschiedliche Konfigurationen von Sensorsystemen repräsentieren, die verschiedene Abbildungsmodalitäten nutzen, wobei erfindungsgemäß mindestens ein Sensorsystem Kamerabilder liefert und mindestens ein weiteres System Radarbilder liefert. So kann beispielsweise die Form eines Objekts sowohl aus Kamerabildern als auch aus Radarbildern ausgewertet werden, während Farben und Texturen aus den Radarbildern nicht hervorgehen.

Die Lenkung des Trainings hin zu Merkmalen, die von der Domäne der Trainingsbilder unabhängig sind, führt insgesamt dazu, dass Trainingsbilder aus verschiedenen Domänen während des Trainings besser zusammenwirken können. Dadurch kann bei einem vorgegebenen Vorrat an Trainingsbildern die Klassifikationsgenauigkeit des Bildklassifikators in Bezug auf die vorgegebenen Klassen gesteigert werden. Insbesondere können Trainingsdaten aus bereits annotierten Domänen so deutlich besser wiederverwendet werden, was den Aufwand zur Erstellung neuer Annotationen deutlich reduzieren kann und damit sehr vorteilhaft ist.

Das Abgreifen der Ausgabe einer Faltungsschicht hat den Vorteil, dass die Domänenklassifikation durch die konkrete Ausgestaltung des Bildklassifikators nicht behindert wird. Viele Bildklassifikatoren durchsuchen den Bildinhalt beispielsweise an einer Vielzahl von Bildausschnitten, die jeweils durch Anker oder Bounding-Boxen definiert sind, und liefern dann ein Ergebnis, das sich auf den Inhalt dieses Ankers, bzw. dieser Bounding-Box, bezieht. Für die Domänenklassifikation können jedoch auch ganz andere Bildbereiche wichtig sein. Gemäß dem hier beschriebenen Verfahren steht dem Domänenklassifikator die jeweils genutzte Ausgabe der Faltungsschicht in vollem Umfang offen. Wenn der Bildklassifikator beispielsweise dazu ausgebildet ist, verkehrsrelevante Objekte in Verkehrssituationen zu klassifizieren, und der Domänenklassifikator entscheiden soll, in welchem Land das Bild aufgenommen wurde, kann dieser Domänenklassifikator also beispielsweise auch eine französische Flagge abseits des Verkehrsgeschehens heranziehen und zum Urteil "Frankreich" kommen.

Die hier beschriebene Wirkung tritt bereits dann ein, wenn ein Domänenklassifikator genutzt wird, der sich in einem statischen Zustand befindet. Es ist lediglich erforderlich, dass die Domänen-Zuordnungen beim Training des Bildklassifikators in die Parameter des Bildklassifikators zurückpropagiert werden können.

In einer besonders vorteilhaften Ausgestaltung werden jedoch zusätzlich Parameter, die das Verhalten des Domänenklassifikators charakterisieren, optimiert mit dem Ziel, dass eine Abweichung der Domänen-Zuordnungen von den tatsächlichen Domänen der jeweiligen Trainingsbilder minimiert wird. Der Bildklassifikator und der Domänenklassifikator werden dann im Training in dem Sinne gegeneinander ausgespielt, dass der Bildklassifikator versucht, zumindest in den Merkmalskarten derjenigen Faltungsschicht, deren Ausgabe in den Domänenklassifikator geführt ist, die Domäne der Trainingsbilder vor dem Domänenklassifikator zu "verheimlichen", während gleichzeitig der Domänenklassifikator immer besser dabei wird, aus den immer spärlicher werdenden Hinweisen in den Merkmalskarten doch noch die Domäne des jeweiligen Trainingsbildes zu extrahieren. Dies ist ein Stück weit analog zum Training von Generative Adversarial Networks, GANs.

Um diesen gegenläufigen Charakter zu stärken, ist vorteilhaft die Ausgabe der Faltungsschicht über eine Gradientenumkehrschicht (gradient reversal layer, GRL) zum Domänenklassifikator geführt. Die Optimierung der Parameter in den Faltungsschichten des Bildklassifikators, die üblicherweise auf einen Gradientenabstieg gerichtet ist, bewirkt dann gleichzeitig aus Sicht des Domänenklassifikators einen Gradientenaufstieg, gegen den das Training des Domänenklassifikators dann wieder ankämpft.

In einer weiteren vorteilhaften Ausgestaltung wird für mindestens ein Trainingsbild, für das keine Soll-Klassifikations-Scores verfügbar sind, eine Abweichung der Domänen-Zuordnungen von der tatsächlichen Domäne ermittelt, jedoch wird zugleich das Ermitteln einer Abweichung der Klassifikations-Scores von Soll-Klassifikations-Scores für dieses Trainingsbild unterdrückt. Auf diese Weise können auch Trainingsbilder weiterer Domänen in das Training einbezogen werden, ohne dass ein zusätzlicher Aufwand für das manuelle "Labeln" vonnöten ist. Je nach Domäne kann der Aufwand für ein solches "Labeln" unterschiedlich groß sein. So sind beispielsweise Kamerabilder einfacher zu "labeln" als Radarbilder. Das Unterdrücken kann beispielsweise bewirkt werden, indem eine Kostenfunktion, die die Abweichung der Klassifikations-Scores von Soll-Klassifikations-Scores misst, auf Null gesetzt wird.

In einer besonders vorteilhaften Ausgestaltung wird die Abweichung der vom Bildklassifikator gelieferten Klassifikations-Scores von den Soll-Klassifikations-Scores mit einer ersten vorgegebenen Kostenfunktion bewertet. Die Abweichung der Domänen-Zuordnungen von den tatsächlichen Domänen der jeweiligen Trainingsbilder wird mit einer zweiten vorgegebenen Kostenfunktion bewertet. Die Bewertungen durch diese beiden Kostenfunktionen werden zu einer Gesamt-Bewertung zusammengeführt. Die Parameter, die das Verhalten des Bildklassifikators charakterisieren, werden mit dem Ziel optimiert, diese Gesamt-Bewertung zu verbessern. Hierbei können insbesondere die beiden Optimierungsziele gegeneinander gewichtet werden.

Sofern auch der Domänenklassifikator trainierbar ist, können vorteilhaft zusätzlich auch die Parameter, die das Verhalten des Domänenklassifikators charakterisieren, mit dem Ziel optimiert werden, die Gesamt-Bewertung zu verbessern. Das bedeutet insbesondere, dass das Training des Domänenklassifikators daran arbeiten kann, die Kostenfunktion des Domänenklassifikators zu erhöhen, was dann wiederum in die Gesamt-Bewertung eingeht. Damit kann auch das Training des Domänenklassifikators in die ganzheitliche, gewichtete Wertung durch die Gesamt-Kostenfunktion einbezogen werden.

In einer besonders vorteilhaften Ausgestaltung werden Bilder von Verkehrssituationen, die für die Planung des Verhaltens eines Fahrzeugs relevante Objekte enthalten, als Trainingsbilder gewählt. Gerade Bilder von Verkehrssituationen können besonders vielen unterschiedlichen Domänen angehören. Zugleich wird für das Training eine große Variabilität von Verkehrssituationen benötigt. Es ist in der Regel nicht praktikabel, diese Variabilität von Verkehrssituationen in jeder einzelnen Domäne zu erfassen. Das hier beschriebene Verfahren erleichtert es, Trainingsbilder über Domänengrenzen hinweg zu nutzen, um so insgesamt die für das Training benötigte Variabilität zu erfassen.

Wenn Bilder von Verkehrssituationen mit Bildklassifikatoren verarbeitet werden, wird das Ergebnis meistens für die Steuerung von Fahrzeugen oder Fahrzeugsystemen verwendet. Daher stellt die Erfindung auch ein diesbezügliches weiteres Verfahren bereit.

Im Rahmen dieses Verfahrens wird zunächst ein Bildklassifikator, wie zuletzt beschrieben, mit Bildern von Verkehrssituationen trainiert. Mit mindestens einem von einem Fahrzeug mitgeführten Sensor werden Bilder aufgenommen. Diese Bilder werden dem trainierten Bildklassifikator als Eingabe-Bilder zugeführt. Unter Heranziehung der vom Bildklassifikator gelieferten Ausgabe wird ein Ansteuersignal erzeugt. Mit diesem Ansteuersignal wird das Fahrzeug angesteuert. Durch das verbesserte Training des Bildklassifikators wird letztendlich die Wahrscheinlichkeit erhöht, dass die in Folge der Ansteuerung vom Fahrzeug ausgeführte Aktion der im Eingabe-Bild dargestellten Verkehrssituation angemessen ist.

Die Verfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Trainieren des Bildklassifikators 1;
Figur 2 Beispielhaftes Abgreifen einer Ausgabe 12a aus einer Faltungsschicht 12 für den Domänenklassifikator 6;
Figur 3 Ausführungsbeispiel des Verfahrens 200 mit vollständiger Wirkkette bis zur Ansteuerung eines Fahrzeugs 50.

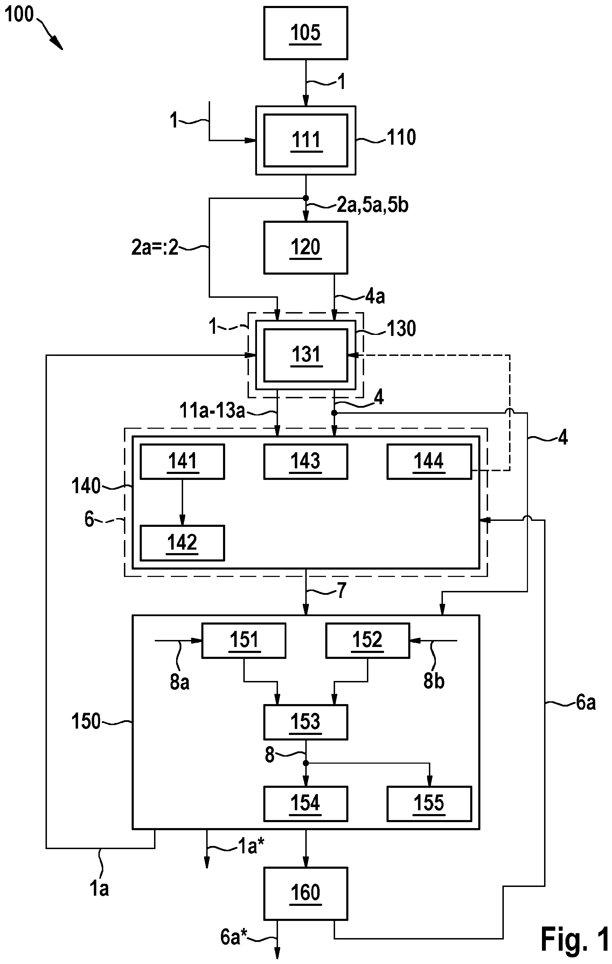

Figur 1 ist ein schematisches Ablaufdiagramm eines Ausführungsbeispiels des Verfahrens 100 zum Trainieren des Bildklassifikators 1. In Schritt 105 kann beispielsweise ein Bildklassifikator gewählt werden, der jedes Pixel eines Eingabe-Bildes 2 klassifiziert und somit eine Segmentierung dieses Eingabe-Bildes 2 liefert.

In Schritt 110 werden Trainingsbilder 2a bereitgestellt, die mindestens zwei verschiedenen Verteilungen 5a, 5b angehören. Diese Verteilungen 5a, 5b korrespondieren zu unterschiedlichen Domänen von Trainingsbildern 2a. Gemäß Block 111 können die Trainingsbilder 2a insbesondere Bilder von Verkehrssituationen sein, die für die Planung des Verhaltens eines Fahrzeugs 50 relevante Objekte enthalten.

In Schritt 120 werden Soll-Klassifikations-Scores 4a bereitgestellt, auf die der Bildklassifikator 1 Trainingsbilder 2a im fertig trainierten Zustand nominell abbilden soll.

In Schritt 130 werden die Trainingsbilder 2a dem Bildklassifikator 1 als Eingabe-Bilder 2 zugeführt und von dem Bildklassifikator 1 jeweils auf einen oder mehrere Klassifikations-Scores 4 abgebildet. Die Bildung von Klassifikations-Scores 4 kann für Trainingsbilder 2a, für die es keine Soll-Klassifikations-Scores 4a gibt, gemäß Block 131 unterdrückt werden.

In Schritt 140 wird mindestens eine Ausgabe 11a-13a einer Faltungsschicht 11-13 einem Domänenklassifikator 6 zugeführt und von diesem Domänenklassifikator 6 auf Domänen-Zuordnungen 7 des Trainingsbildes 2a zu verschiedenen Domänen abgebildet.

Hierbei kann insbesondere beispielsweise gemäß Block 141 ein Domänenklassifikator 6 mit mindestens einer vollvernetzten Schicht gewählt werden, so dass dann gemäß Block 142 räumliche Auswahlen aus der Ausgabe 11a-13a der Faltungsschicht 11-13 in diese vollvernetzte Schicht geführt werden können.

Alternativ kann beispielsweise gemäß Block 143 ein Domänenklassifikator 6 gewählt werden, der eine Segmentierung der Ausgabe 11a-13a der Faltungsschicht 11-13 nach Domänen erzeugt.

Gemäß Block 144 kann für mindestens ein Trainingsbild 2a, für das keine Soll-Klassifikations-Scores 4a verfügbar sind, dennoch eine Abweichung der Domänen-Zuordnung 7 von der tatsächlichen Domäne ermittelt werden, so dass dieses Trainingsbild 2a die angestrebte Domänen-Unabhängigkeit des Bildklassifikators 1 fördern kann. Zugleich kann dann jedoch gemäß Block 131 das Ermitteln einer Abweichung der Klassifikations-Scores 4 von Soll-Klassifikations-Scores 4a, und somit auch das vollständige Ermitteln des Klassifikations-Scores 4, unterdrückt werden. Das heißt, die Faltungsschichten 11-13 des Bildklassifikators 1 müssen für ein solches Trainingsbild lediglich diejenige Ausgabe 11a-13a erzeugen, die für den Domänenklassifikator 6 benötigt wird. Das Unterdrücken kann beispielsweise bewirkt werden, indem eine Kostenfunktion, die die Abweichung der Klassifikations-Scores 4 von Soll-Klassifikations-Scores 4a misst, auf Null gesetzt wird.

In Schritt 150 werden Parameter 1a, die das Verhalten des Bildklassifikators (1) charakterisieren, optimiert mit dem Ziel, dass bei weiterer Verarbeitung von Trainingsbildern 2a eine Abweichung der vom Bildklassifikator 1 gelieferten Klassifikations-Scores 4 von den Soll-Klassifikations-Scores 4a minimiert wird, während eine Abweichung der Domänen-Zuordnungen 7 von den tatsächlichen Domänen der jeweiligen Trainingsbilder 2a maximiert wird. Der fertig trainierte Zustand der Parameter 1a ist mit dem Bezugszeichen 1a* bezeichnet.

Hierbei kann insbesondere gemäß Block 151 die Abweichung der vom Bildklassifikator 1 gelieferten Klassifikations-Scores 4 von den Soll-Klassifikations-Scores 4a mit einer ersten vorgegebenen Kostenfunktion 8a bewertet werden. Gemäß Block 152 kann die Abweichung der Domänen-Zuordnungen 7 von den tatsächlichen Domänen der jeweiligen Trainingsbilder 2a mit einer zweiten vorgegebenen Kostenfunktion 8b bewertet werden. Die Bewertungen durch diese beiden Kostenfunktionen 8a und 8b können gemäß Block 153 zu einer Gesamt-Bewertung 8 zusammengeführt werden. Gemäß Block 154 können die Parameter 1a, die das Verhalten des Bildklassifikators 1 charakterisieren, mit dem Ziel optimiert werden 154, diese Gesamt-Bewertung 8 zu verbessern.

Zusätzlich können auch gemäß Block 155 die Parameter 6a, die das Verhalten des Domänenklassifikators 6 charakterisieren, mit dem Ziel optimiert werden, die Gesamt-Bewertung 8 zu verbessern. Der fertig trainierte Zustand dieser Parameter 6a ist mit dem Bezugszeichen 6a* bezeichnet.

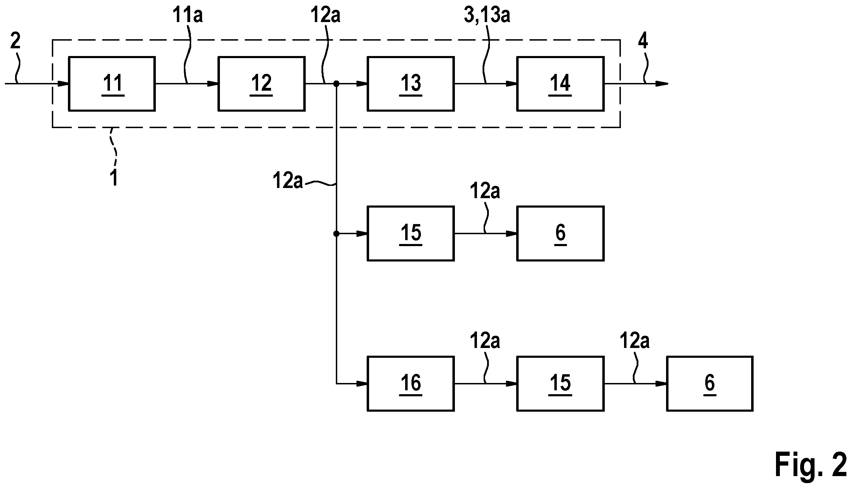

Figur 2 zeigt beispielhaft einen Bildklassifikator 1 mit drei Faltungsschichten 11, 12 und 13 sowie einer Klassifikatorschicht 14. Die erste Faltungsschicht 11 nimmt das Eingabe-Bild 2 entgegen. Die Faltungsschichten 11 und 12 geben ihre jeweiligen Ausgaben 11a bzw. 12a an die jeweils nächste Faltungsschicht 12 bzw. 13 weiter. Die Ausgabe 13a der letzten Faltungsschicht 13 wird als Zwischenprodukt 3 der Klassifikatorschicht 14 zugeführt und dort auf die gesuchten Klassifikations-Scores 4 abgebildet.

In dem in Figur 2 gezeigten Beispiel wird die Ausgabe 12a der Faltungsschicht 12 dem Domänenklassifikator 6 zugeführt. Dies kann beispielsweise direkt oder auch über eine ROI-Pooling-Schicht 16, die zuvor räumliche Auswahlen aus der Ausgabe 12a vornimmt, geschehen. Um ein Training des Domänenklassifikators 6 zu unterstützen, kann zusätzlich eine Gradientenumkehrschicht 15 vorgesehen sein.

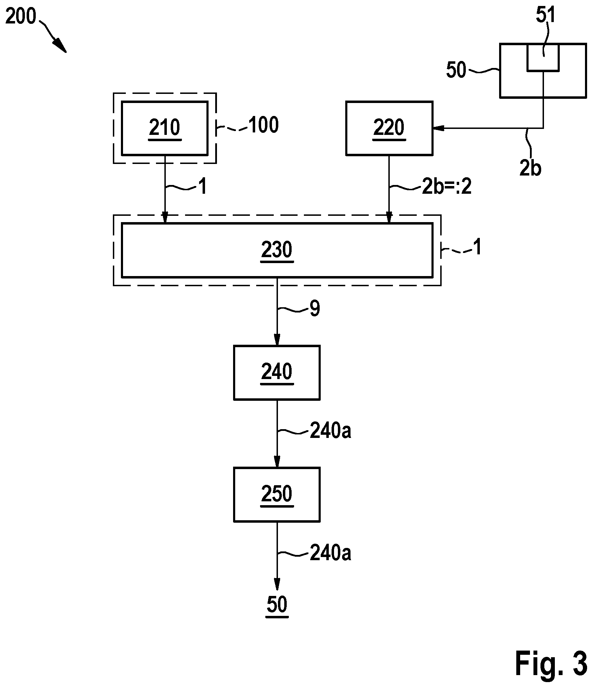

Figur 3 ist ein Ausführungsbeispiel des Verfahrens 200 mit der vollständigen Wirkkette bis zur Ansteuerung des Fahrzeugs 50.

In Schritt 210 wird ein Bildklassifikator 1 mit dem zuvor beschriebenen Verfahren 100 trainiert, wobei Bilder von Verkehrssituationen als Trainingsbilder 2a gewählt werden.

In Schritt 220 werden mit mindestens einem von einem Fahrzeug 50 mitgeführten Sensor 51 Bilder 2b aufgenommen. Diese Bilder 2b werden in Schritt 230 dem Bildklassifikator 1 als Eingabe-Bilder 2 zugeführt.

Der Bildklassifikator 1 verarbeitet die Eingabe-Bilder 2 zu einer Ausgabe 9. Unter Heranziehung dieser Ausgabe 9 wird in Schritt 240 ein Ansteuersignal 240a gebildet. Das Fahrzeug 50 wird mit diesem Ansteuersignal 240a angesteuert.

## Patentansprüche

1. Verfahren (100) zum Trainieren eines Bildklassifikators (1), der ein Eingabe-Bild (2) in einer Abfolge aus mehreren Faltungsschichten (11-13) zu einem Zwischenprodukt (3) verarbeitet und dieses Zwischenprodukt (3) mit mindestens einer Klassifikatorschicht (14) auf einen oder mehrere Klassifikations-Scores (4) bezüglich einer oder mehrerer vorgegebener Klassen abbildet, mit den Schritten:
• es werden Trainingsbilder (2a) bereitgestellt (110), wobei mindestens eine erste Teilmenge der Trainingsbilder (2a) einer ersten Verteilung (5a) angehört, mindestens eine zweite Teilmenge der Trainingsbilder einer zweiten Verteilung (5b) angehört und diese beiden Verteilungen (5a, 5b) zu unterschiedlichen Domänen von Trainingsbildern (2a) korrespondieren;
• es werden Soll-Klassifikations-Scores (4a) bereitgestellt (120), auf die der Bildklassifikator (1) Trainingsbilder (2a) im fertig trainierten Zustand nominell abbilden soll;
• die Trainingsbilder (2a) werden dem Bildklassifikator (1) als Eingabe-Bilder (2) zugeführt und von dem Bildklassifikator (1) jeweils auf einen oder mehrere Klassifikations-Scores (4) abgebildet (130);
• mindestens eine hierbei entstehende Ausgabe (11a-13a) einer Faltungsschicht (11-13) wird einem Domänenklassifikator (6) zugeführt und von diesem Domänenklassifikator (6) auf Domänen-Zuordnungen (7) des Trainingsbildes (2a) zu verschiedenen Domänen abgebildet (140), wobei
o ein Domänenklassifikator (6) mit mindestens einer vollvernetzten Schicht gewählt wird (141) und wobei räumliche Auswahlen aus der Ausgabe (11a-13a) der Faltungsschicht (11-13) in diese vollvernetzte Schicht geführt werden (142) oder
o ein Domänenklassifikator (6) gewählt wird (143), der eine Segmentierung der Ausgabe (11a-13a) der Faltungsschicht (11-13) nach Domänen erzeugt;
• Parameter (1a), die das Verhalten des Bildklassifikators (1) charakterisieren, werden optimiert (150) mit dem Ziel, dass bei weiterer Verarbeitung von Trainingsbildern (2a) eine Abweichung der vom Bildklassifikator (1) gelieferten Klassifikations-Scores (4) von den Soll-Klassifikations-Scores (4a) minimiert wird, während eine Abweichung der Domänen-Zuordnungen (7) von den tatsächlichen Domänen der jeweiligen Trainingsbilder (2a) maximiert wird,
wobei Trainingsbilder (2a) aus Domänen gewählt werden, die zu unterschiedlichen Konfigurationen der für die Bildaufnahme verwendeten Sensorsysteme korrespondieren, wobei mindestens ein Sensorsystem Kamerabilder liefert,
**dadurch gekennzeichnet, dass**
mindestens ein weiteres Sensorsystem Radarbilder liefert.

2. Verfahren (100) nach Anspruch 1, wobei zusätzlich Parameter (6a), die das Verhalten des Domänenklassifikators (6) charakterisieren, optimiert werden (160) mit dem Ziel, dass eine Abweichung der Domänen-Zuordnungen (7) von den tatsächlichen Domänen der jeweiligen Trainingsbilder (2a) minimiert wird.

3. Verfahren (100) nach Anspruch 2, wobei die Ausgabe (11a-13a) der Faltungsschicht (11-13) über eine Gradientenumkehrschicht (15) zum Domänenklassifikator (6) geführt ist.

4. Verfahren (100) nach einem der Ansprüche 1 bis 3, wobei für mindestens ein Trainingsbild (2a), für das keine Soll-Klassifikations-Scores (4a) verfügbar sind, eine Abweichung der Domänen-Zuordnungen (7) von der tatsächlichen Domäne ermittelt wird (144), jedoch das Ermitteln einer Abweichung der Klassifikations-Scores (4) von Soll-Klassifikations-Scores (4a) unterdrückt wird (131).

5. Verfahren (100) nach einem der Ansprüche 1 bis 4, wobei ein Bildklassifikator (1) gewählt wird (105), der dazu ausgebildet ist, das Eingabe-Bild (2) auf einen oder mehrere Klassifikations-Scores (4) je Pixel des Eingabe-Bildes (2) abzubilden und so eine semantische Segmentierung dieses Eingabe-Bildes (2) zu liefern.

6. Verfahren (100) nach einem der Ansprüche 1 bis 5, wobei
• die Abweichung der vom Bildklassifikator (1) gelieferten Klassifikations-Scores (4) von den Soll-Klassifikations-Scores (4a) mit einer ersten vorgegebenen Kostenfunktion (8a) bewertet wird (151),
• die Abweichung der Domänen-Zuordnungen (7) von den tatsächlichen Domänen der jeweiligen Trainingsbilder (2a) mit einer zweiten vorgegebenen Kostenfunktion (8b) bewertet wird (152),
• die Bewertungen durch die beiden Kostenfunktionen (8a, 8b) zu einer Gesamt-Bewertung (8) zusammengeführt werden (153) und
• die Parameter (1a), die das Verhalten des Bildklassifikators (1) charakterisieren, mit dem Ziel optimiert werden (154), diese Gesamt-Bewertung (8) zu verbessern.

7. Verfahren (100) nach Anspruch 6 und 2, wobei zusätzlich auch die Parameter (6a), die das Verhalten des Domänenklassifikators (6) charakterisieren, mit dem Ziel optimiert werden (155), die Gesamt-Bewertung (8) zu verbessern.

8. Verfahren (100) nach einem der Ansprüche 1 bis 7, wobei zusätzlich Trainingsbilder (2a) aus Domänen gewählt werden, die zu
• unterschiedlichen Tages- und/oder Jahreszeiten bei der Bildaufnahme, und/oder
• unterschiedlichen Wetterbedingungen bei der Bildaufnahme, und/oder
• unterschiedlichen geographischen Regionen, in denen die Trainingsbilder (2a) aufgenommen wurden,
korrespondieren.

9. Verfahren (100) nach einem der Ansprüche 1 bis 8, wobei Bilder von Verkehrssituationen, die für die Planung des Verhaltens eines Fahrzeugs (50) relevante Objekte enthalten, als Trainingsbilder (2a) gewählt werden (111).

10. Verfahren mit den Schritten:
• ein Bildklassifikator (1) wird mit dem Verfahren (100) nach Anspruch 9 trainiert (210);
• mit mindestens einem von einem Fahrzeug (50) mitgeführten Sensor (51) werden Bilder (2b) aufgenommen (220);
• die Bilder (2b) werden dem trainierten Bildklassifikator (1) als Eingabe-Bilder (2) zugeführt (230);
• unter Heranziehung der vom Bildklassifikator (1) gelieferten Ausgabe (9) wird ein Ansteuersignal (240a) gebildet (240);
• das Fahrzeug (50) wird mit dem Ansteuersignal (240a) angesteuert (250).

11. Computerprogramm, enthaltend maschinenlesbare Anweisungen, die, wenn sie auf einem oder mehreren Computern ausgeführt werden, den oder die Computer dazu veranlassen, ein Verfahren (100, 200) nach einem der Ansprüche 1 bis 10 auszuführen.

12. Maschinenlesbarer Datenträger mit dem Computerprogramm nach Anspruch 11.

13. Computer, ausgerüstet mit dem Computerprogramm nach Anspruch 11, mit einem Dowloadprodukt mit dem Computerprogramm nach Anspruch 11 und/oder mit dem maschinenlesbaren Datenträger nach Anspruch 12.

## Claims

1. Method (100) for training an image classifier (1) that processes an input image (2) in a sequence of multiple convolutional layers (11-13) to form an intermediate product (3) and maps this intermediate product (3), with at least one classifier layer (14), to one or more classification scores (4) with regard to one or more predefined classes, comprising the following steps:
• providing (110) training images (2a), wherein at least a first subset of the training images (2a) belongs to a first distribution (5a), at least a second subset of the training images belongs to a second distribution (5b) and these two distributions (5a, 5b) correspond to different domains of training images (2a);
• providing (120) target classification scores (4a) to which the image classifier (1) is intended to nominally map training images (2a) in the fully trained state;
• supplying the training images (2a) to the image classifier (1) as input images (2), and the image classifier (1) mapping (130) each of said images to one or more classification scores (4);
• supplying at least one resulting output (11a-13a) of a convolutional layer (11-13) to a domain classifier (6), and this domain classifier (6) mapping (140) said at least one output to domain assignments (7) of the training image (2a) for different domains, wherein
o a domain classifier (6) having at least one fully connected layer is selected (141), and wherein spatial selections from the output (11a-13a) of the convolutional layer (11-13) are fed into this fully connected layer (142) or
o a domain classifier (6) that generates a segmentation of the output (11a-13a) of the convolutional layer (11-13) by domain is selected (143);
• parameters (1a) characterizing the behaviour of the image classifier (1) are optimized (150) with the objective, in the further processing of training images (2a), of minimizing a deviation of the classification scores (4) delivered by the image classifier (1) from the target classification scores (4a), while maximizing a deviation of the domain assignments (7) from the actual domains of the respective training images (2a),
wherein training images (2a) are selected from domains that correspond to different configurations of the sensor systems used for image capture, wherein at least one sensor system delivers camera images, **characterized in that** at least one further sensor system delivers radar images.

2. Method (100) according to Claim 1, wherein parameters (6a) characterizing the behaviour of the domain classifier (6) are additionally optimized (160) with the objective of minimizing a deviation of the domain assignments (7) from the actual domains of the respective training images (2a).

3. Method (100) according to Claim 2, wherein the output (11a-13a) of the convolutional layer (11-13) is fed into the domain classifier (6) via a gradient reversal layer (15).

4. Method (100) according to one of Claims 1 to 3, wherein, for at least one training image (2a) for which no target classification scores (4a) are available, a deviation of the domain assignments (7) from the actual domain is determined (144), but the determination of a deviation of the classification scores (4) from target classification scores (4a) is suppressed (131).

5. Method (100) according to one of Claims 1 to 4, wherein an image classifier (1) that is designed to map the input image (2) to one or more classification scores (4) per pixel of the input image (2), and thus to deliver a semantic segmentation of this input image (2), is selected (105).

6. Method (100) according to one of Claims 1 to 5, wherein
• the deviation of the classification scores (4) delivered by the image classifier (1) from the target classification scores (4a) is evaluated (151) using a first predefined cost function (8a),
• the deviation of the domain assignments (7) from the actual domains of the respective training images (2a) is evaluated (152) using a second predefined cost function (8b),
• the evaluations carried out by the two cost functions (8a, 8b) are combined (153) to form an overall evaluation (8), and
• the parameters (1a) characterizing the behaviour of the image classifier (1) are optimized (154) with the objective of improving this overall evaluation (8).

7. Method (100) according to Claim 6 and 2, wherein parameters (6a) characterizing the behaviour of the domain classifier (6) are also additionally optimized (155) with the objective of improving the overall evaluation (8).

8. Method (100) according to one of Claims 1 to 7, wherein, in addition, training images (2a) are selected from domains that correspond to
• different times of day and/or seasons during image capture, and/or
• different weather conditions during image capture, and/or
• different geographical regions in which the training images (2a) were captured.

9. Method (100) according to one of Claims 1 to 8, wherein images of traffic situations containing objects relevant to the planning of the behaviour of a vehicle (50) are selected (111) as training images (2a).

10. Method, comprising the following steps:
• training (210) an image classifier (1) using the method (100) according to Claim 9;
• capturing (220) images (2b) using at least one sensor (51) carried by a vehicle (50);
• supplying (230) the images (2b) to the trained image classifier (1) as input images (2);
• forming (240) a control signal (240a) using the output (9) delivered by the image classifier (1);
• controlling (250) the vehicle (50) using the control signal (240a).

11. Computer program containing machine-readable instructions that, when they are executed on one or more computers, cause the one or more computers to carry out a method (100, 200) according to one of Claims 1 to 10.

12. Machine-readable data carrier containing the computer program according to Claim 11.

13. Computer equipped with the computer program according to Claim 11, with a download product containing the computer program according to Claim 11 and/or with the machine-readable data carrier according to Claim 12.

## Revendications

1. Procédé (100) pour l'apprentissage d'un classificateur d'images (1) qui traite une image d'entrée (2) dans une séquence de plusieurs couches de convolution (11-13) en un produit intermédiaire (3) et qui mappe ce produit intermédiaire (3) avec au moins une couche de classificateur (14) sur un ou plusieurs scores de classification (4) par rapport à une ou plusieurs classes prédéfinies, comprenant les étapes suivantes :
• il est fourni (110) des images d'apprentissage (2a), au moins un premier sous-ensemble des images d'apprentissage (2a) appartenant à une première distribution (5a), au moins un deuxième sous-ensemble des images d'apprentissage appartenant à une deuxième distribution (5b) et ces deux distributions (5a, 5b) correspondant à des domaines différents d'images d'apprentissage (2a) ;
• des scores de classification cibles (4a) sont fournis (120), sur lesquels le classificateur d'images (1) doit mapper nominalement des images d'apprentissage (2a) dans l'état d'apprentissage terminé ;
• les images d'apprentissage (2a) sont transmises au classificateur d'images (1) en tant qu'images d'entrée (2) et sont mappées (130) par le classificateur d'images (1) respectivement par rapport à un ou plusieurs scores de classification (4) ;
• au moins une sortie (11a-13a) d'une couche de convolution (11-13) qui en résulte est transmise à un classificateur de domaine (6) et est mappée (140) par ce classificateur de domaine (6) par rapport à des attributions de domaine (7) de l'image d'apprentissage (2a) à différents domaines, dans lequel
o un classificateur de domaine (6) avec au moins une couche entièrement en réseau est sélectionné (141) et des sélections spatiales de la sortie (11a-13a) de la couche de convolution (11-13) sont introduites dans cette couche entièrement en réseau (142), ou
o un classificateur de domaine (6) est sélectionné (143), lequel produit une segmentation de la sortie (11a-13a) de la couche de convolution (11-13) en fonction des domaines ;
• des paramètres (1a) qui caractérisent le comportement du classificateur d'images (1) sont optimisés (150) dans le but que, lors du traitement ultérieur d'images d'apprentissage (2a), un écart des scores de classification (4) fournis par le classificateur d'images (1) soit minimisé par rapport aux scores de classification cibles (4a), tandis qu'un écart des attributions de domaines (7) soit maximisé par rapport aux domaines réels des images d'apprentissage respectives (2a),
des images d'apprentissage (2a) étant sélectionnées à partir de domaines qui correspondent à différentes configurations des systèmes de capteurs utilisés pour la prise de vue, au moins un système de capteurs fournissant des images de caméra, **caractérisé en ce qu'**au moins un autre système de capteurs fournit des images radar.

2. Procédé (100) selon la revendication 1, dans lequel en outre des paramètres (6a) qui caractérisent le comportement du classificateur de domaines (6) sont optimisés (160) dans le but de minimiser un écart des attributions de domaines (7) par rapport aux domaines réels des images d'apprentissage respectives (2a).

3. Procédé (100) selon la revendication 2, dans lequel la sortie (11a-13a) de la couche de convolution (11-13) est guidée vers le classificateur de domaine (6) via une couche d'inversion de gradient (15).

4. Procédé (100) selon l'une des revendications 1 à 3, dans lequel, pour au moins une image d'apprentissage (2a) pour laquelle aucun score de classification cible (4a) n'est disponible, un écart des attributions de domaine (7) par rapport au domaine réel est déterminé (144), mais la détermination d'un écart des scores de classification (4) par rapport aux scores de classification cibles (4a) est supprimée (131).

5. Procédé (100) selon l'une des revendications 1 à 4, dans lequel il est choisi (105) un classificateur d'image (1) adapté pour mapper l'image d'entrée (2) sur un ou plusieurs scores de classification (4) par pixel de l'image d'entrée (2) et fournir ainsi une segmentation sémantique de cette image d'entrée (2).

6. Procédé (100) selon l'une des revendications 1 à 5, dans lequel
• l'écart entre les scores de classification (4) fournis par le classificateur d'images (1) et les scores de classification cibles (4a) est évalué (151) par une première fonction de coût (8a) prédéfinie,
• l'écart entre les attributions de domaine (7) et les domaines réels des images d'apprentissage respectives (2a) est évalué (152) avec une deuxième fonction de coût (8b) prédéfinie,
• les évaluations par les deux fonctions de coût (8a, 8b) sont réunies (153) en une évaluation globale (8) et
• les paramètres (1a) qui caractérisent le comportement du classificateur d'images (1) sont optimisés (154) dans le but d'améliorer cette évaluation globale (8).

7. Procédé (100) selon les revendications 6 et 2, dans lequel, en outre, les paramètres (6a) qui caractérisent le comportement du classificateur de domaine (6) sont également optimisés (155) dans le but d'améliorer l'évaluation globale (8).

8. Procédé (100) selon l'une des revendications 1 à 7, comprenant en outre la sélection d'images d'apprentissage (2a) parmi des domaines qui correspondent à
• différents moments de la journée et/ou de l'année lors de la prise de vue, et/ou
• des conditions météorologiques différentes lors de la prise de vue, et/ou
• différentes zones géographiques dans lesquelles les images d'apprentissage (2a) ont été prises.

9. Procédé (100) selon l'une des revendications 1 à 8, dans lequel des images de situations de trafic contenant des objets pertinents pour la planification du comportement d'un véhicule (50) sont choisies (111) comme images d'apprentissage (2a).

10. Procédé comprenant les étapes suivantes :
• un classificateur d'images (1) fait l'objet d'un apprentissage (210) par le procédé (100) selon la revendication 9 ;
• des images (2b) sont prises (220) avec au moins un capteur (51) embarqué par un véhicule (50) ;
• les images (2b) sont transmises (230) en tant qu'images d'entrée (2) au classificateur d'images (1) ayant fait l'objet d'un apprentissage ;
• un signal de commande (240a) est formé (240) en utilisant la sortie (9) fournie par le classificateur d'images (1) ;
• le véhicule (50) est commandé (250) au moyen du signal de commande (240a).

11. Programme informatique comprenant des instructions lisibles par une machine qui, lorsqu'elles sont exécutées sur un ou plusieurs ordinateurs, amènent le ou les ordinateurs à mettre en oeuvre un procédé (100, 200) selon l'une des revendications 1 à 10.

12. Support de données lisible par machine contenant le programme informatique selon la revendication 11.

13. Ordinateur équipé du programme d'ordinateur selon la revendication 11, d'un produit de téléchargement comprenant le programme d'ordinateur selon la revendication 11 et/ou du support de données lisible par une machine selon la revendication 12.
